# EUROPEAN PATENT APPLICATION

(11) **EP 0 568 057 A2**
(43) Date of publication of application: **03.11.1993**
(21) Application number: 93106953.8
(22) Date of filing: 29.04.1993
(51) Int. Cl.: G11B 23/087

(54) **Thin-walled cassette cover**

(30) Priority: 01.05.1992 US 877477
(71) Applicant: MINNESOTA MINING AND MANUFACTURING COMPANY, St. Paul, Minnesota 55133-3427 (US)
(72) Inventor: Anderson, Gregory P., c/o Minnesota Mining and, St. Paul, Minnesota 55133-3427 (US); Bernard, John M., c/o Minnesota Mining and, St. Paul, Minnesota 55133-3427 (US); Johanson, Bradley J., c/o Minnesota Mining and, St. Paul, Minnesota 55133-3427 (US)
(74) Representative: Hilleringmann, Jochen, Dipl.-Ing.

(57) **Abstract**

A videocassette cover 12 has reduced wall thickness. The upper wall 56 of the cover 12 has a first portion 164 of conventional thickness in the center of the cover upper wall 56 and spaced from the side, front, and rear walls. The first portion 164 extends over an area which encompasses at least the area contacted by the reel spring 54. The upper wall 56 also has a second portion 166 of reduced thickness located adjacent the side, front, and rear walls.

## Description

### TECHNICAL FIELD

The present invention relates to molded parts. More particularly, the present invention relates to molded cassette parts.

### BACKGROUND OF THE INVENTION

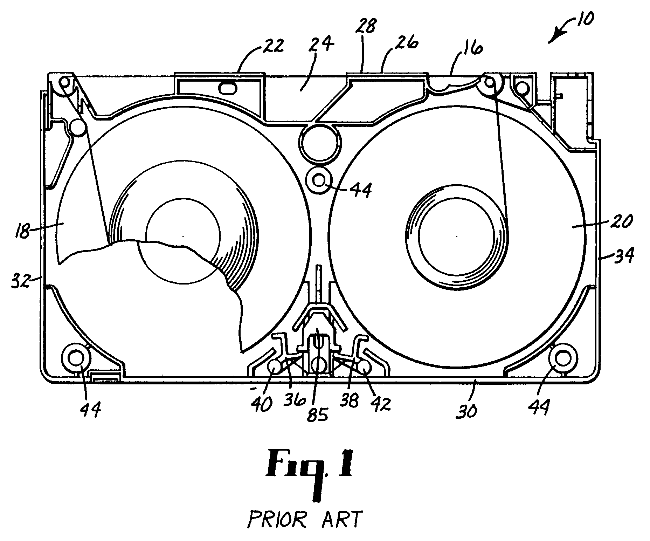

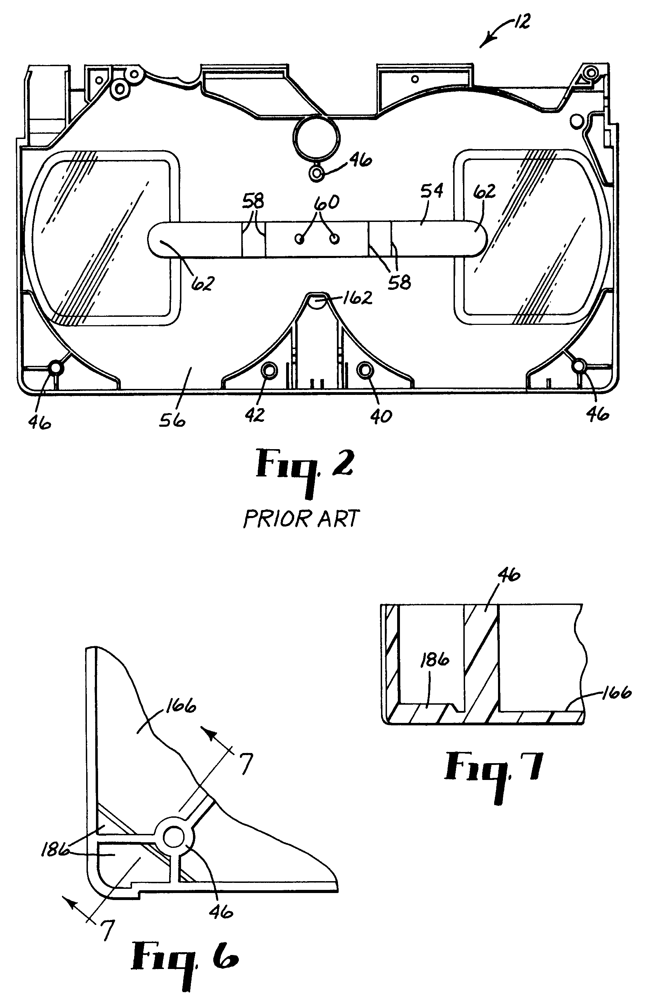

Cassettes for holding reels of magnetic recording tape are well-known, and, in the case of videocassettes for home use, are sold commercially in large volumes into a very price-competitive market. Videocassettes typically include a housing having a reel of magnetic recording tape called the supply reel and a take-up reel. One end of the tape on the supply reel is attached to the take-up reel. As shown in Figures 1 and 2, the housing typically includes a lower half, called the base 10, and an upper half, called the cover 12. A door (not shown), which protects the exposed length of tape 16 running between the supply reel 18 and the take-up reel 20 when the cassette is not in use, is attached to the cover 12. These cassettes operate in a videocassette recorder (VCR) which is capable of both playing and recording.

The tape 16 follows a prescribed path from the supply reel 18, over various tape guides, out of the housing, across a planar area called the left bridge 22, across an open area 24 where the tape 16 is unsupported, to a planar area called the right bridge 26, and back into the housing to the take-up reel 20. The long side of the cassette on which the bridges 22, 26 are located is the front 28 of the cassette, and the long side opposite the front side of the cassette is the rear 30 of the cassette.

The end of the cassette nearest the supply reel 18 is the left end 32 of the cassette, and the end of the cassette nearest the take-up reel 20 is the right end 34. These conventions are consistent with the manner in which a videocassette is typically inserted into the VCR; the front 28 of the cassette enters the machine first, with the base 10 on the bottom and the rear 30 of the cassette trailing.

Several other parts are also included in the cassette which enable the entire device to be safely and conveniently placed in a compatible machine for recording or playing. These parts include reel brakes 36, 38, which pivot on pins 40, 42, which typically are molded as part of the base 10. The reel brakes 36, 38 keep the reels 18, 20 from unrolling the tape 16 when the cassette is out the VCR. Other safety devices signal the VCR that the end of the tape 16 has been reached, thereby preventing damage to the recorded material.

The base 10 and cover 12 fit together to enclose the tape reels 18, 20, along with the other internal parts, to exclude contaminants and protect the tape 16 from damage. Alignment of the cover 12 with the base 10 is assured by screw bosses 44 in the base 10 which mate with corresponding bosses 46 in the cover 12, as shown in Figure 2.

A significant part of the cassette cost arises from the size and complexity of the base 10 and cover 12. Videocassette housings typically are injection molded using a synthetic resin such as polystyrene or acrylonitrile-butadiene-styrene (ABS). Molds for the base 10 and cover 12 are typically designed to pull apart vertically, with one half of the mold forming substantially all of the internal parts of the base 10 or cover 12, and the other half forming the outside surfaces of the part. Since videocassette housings have large wall areas, reducing wall thickness is important to minimizing injection molding costs. Wall thickness contributes to part cost not only through the quantity of material used in the part, but also through the time required to cool the part before ejection from the mold. While material consumption is proportional to the first power of wall thickness, the cooling time required before a part can be ejected from a mold is more nearly proportional to the square of the wall thickness. Since cooling the part sufficiently to allow ejection without warping or other damage consumes about 80% of the total molding time, it is clear that reduction of wall thickness presents significant opportunities for increasing the productivity of the videocassette manufacturing process.

However, there are limits to how thin the walls of a videocassette housing can be made. Naturally, the walls must be of sufficient thickness to provide the physical strength and rigidity necessary for proper functioning of the cassette. One of the important factors dictating wall thickness of the cover 12 is the presence of the reel spring 54, shown in Figure 2. The spring 54 is typically formed from a thin strip of metal which is bent slightly away from the cover surface 56 at crimps 58 to press downward on the centers of reels 18, 20 when the cover 12 is fitted onto the base 10. The reel spring 54 is typically held in place by bosses 60, which pass through holes in the spring 54 and are pressed down with a heated riveting tool to form expanded heads which press the spring 54 against the cover surface 56. Because the ends 62 of the spring 54 press against the centers of the reels 18, 20, the cover surface 56 must have sufficient structural strength, and hence sufficient wall thickness, to sustain this spring force without excessive outward bowing or breakage.

Another factor in determining wall thickness is resin flow during injection molding. During injection of the material into the mold, the various parts of the mold serve not only to determine the size and shape of the part being molded, but also act as passages through which the molten plastic must flow to reach other parts of the mold. If a wall section is too thin, the portion of the mold forming that wall section will be correspondingly thin, thereby restricting flow, and causing excessive reduction in injection pressure at points farther from the point of injection, or gate. As a result, the injection pressure may have to be raised, or the injection time may have to be lengthened, or both.

Increasing injection pressure can create undesirable side effects. U.S. Patent No. 4,706,149 describes the ejection difficulties which can arise when injection pressures are high. Additionally, polymeric materials which are forced to flow through very thin channels at the high shear rates produced by high injection pressures often undergo excessive orientation of the polymer chains, which can weaken the part and directionally vary shrink rates, which can, in turn, lead to warping.

Since cassette bases and covers have sections having a variety of shapes and thicknesses, these various sections will require different times to cool during injection molding. The overall cooling time required for the part will be determined by the slowest cooling section, called the "critical section for cooling." Further, as the cooling time for some sections is shortened by thinning, it is possible that another section may become the critical section. Therefore, thinning of only the wall sections may not be sufficient to significantly shorten the overall cooling time for the part.

While ribbing can be used to allow wall sections to be made thinner, it has been found undesirable to make certain portions of the walls of videocassette housings thinner than they are currently. None of the known cassette covers have a reduced wall thickness in areas where permitted and improved transition between areas of reduced thickness and areas of conventional thickness.

### SUMMARY OF THE INVENTION

The videocassette cover according to the present invention includes an upper wall with a mounting device for receiving a reel spring. Two opposing side walls are perpendicular to the upper wall, a front wall is perpendicular to the upper wall and the side walls, and a rear wall opposes the front wall and is perpendicular to the upper wall and the side walls. A first portion of conventional thickness is located substantially in the center of the cover upper wall and is spaced from the side, front, and rear walls. The first portion extends over an area which encompasses at least the area contacted by the reel spring and can be cross-shaped. A second portion of reduced thickness is located substantially adjacent the side, front, and rear walls.

The upper wall has a transition area of varying thickness located between the first and second portions. The transition area varies uniformly from the thickness of the first portion to the thickness of the second portion and extends between the first and second portions at only the sides of the first portion that run generally in the same direction as the side walls of the cover.

The cover side walls combine with the rear wall to form rear corners of the cover and the thickness of the upper wall in the rear corners of the cover is greater than the thickness of the remainder of the second portion located substantially adjacent the side, front, and rear walls to form a thicker corner pad.

### BRIEF DESCRIPTION OF THE DRAWINGS

Figure 1 is a plan view of the base of a known videocassette.

Figure 2 is a plan view of a known cover of the videocassette of Figure 1.

Figure 3 is a plan view of a cover of a videocassette according to the present invention.

Figure 4 is a cross-sectional view of the videocassette taken along line 4-4 of Figure 3.

Figure 5 is a cross-sectional view of the videocassette taken along line 5-5 of Figure 3.

Figure 6 is an enlarged view of the corner pad of Figure 3.

Figure 7 is a cross-sectional view taken through line 7-7 of Figure 6.

### DETAILED DESCRIPTION OF PREFERRED EMBODIMENTS

A videocassette cover according to the present invention includes an upper wall including a mounting device for receiving a reel spring, two opposing side walls perpendicular to the upper wall, a front wall perpendicular to the upper wall and the side walls, and a rear wall opposing the front wall and perpendicular to the upper wall and the side walls. The side walls define the left and right ends 32, 34 of the cassette while the respective front and rear walls define the front 28 and rear 30 of the cassette.

The center portion of the cover surface 56 of the cover 12, especially in the area of the label indentation 160, appears to already be near the minimum thickness permissible for proper functioning of the cover 12 due to a number of considerations: the label indentation 160 has a depth in the range of 0.49-0.53 mm; the spring 54 presses outwardly against the cover top wall 56 in the center of the area defined by the label indentation 160; and during injection molding of the cover 12, the molding material must flow through the label indentation area 160 in getting from the gate 162 to the rest of the cover 12. Making the cover top wall 56 too thin in the label indentation area 160 could not only reduce the structural strength of the cover 12 to an unacceptable level, but also impede filling of the mold used in making the part, and perhaps lead to warpage of the part.

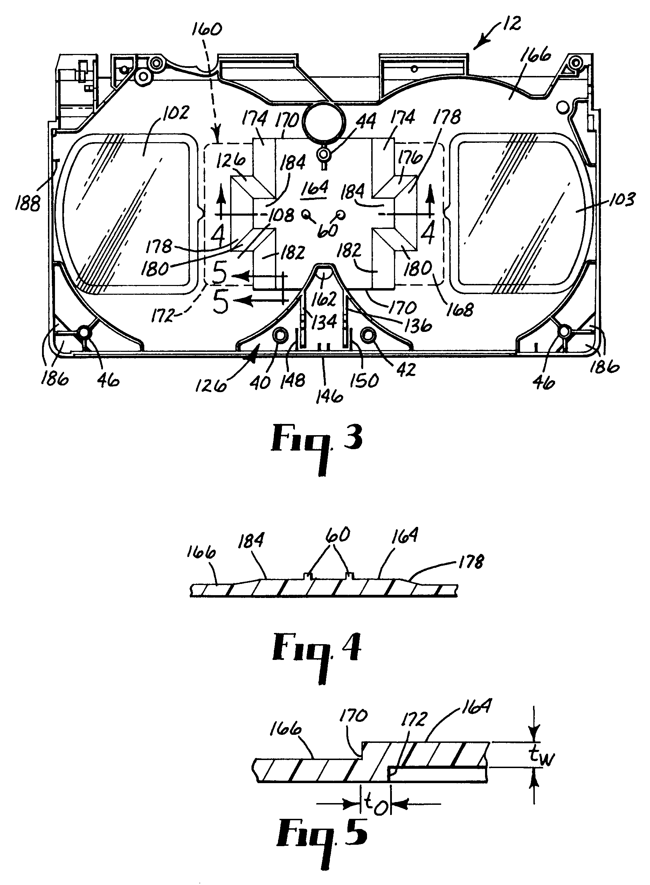

It has been found that the thickness in portions of the cover top wall 56 outside the label area 160 can be reduced, provided that suitable transitions are made between areas of conventional thickness and the areas of reduced thickness. More specifically, referring to Figures 3 and 4, a portion of the cover, area 164, is of conventional wall thickness, which is about 2.0 mm (0.08 in). This thicker area 164 is shown as cross-shaped, although other shapes, such as rectangular, also can be used and can extend beyond, within, or to the label indentation 160 edges.

Another portion of the cover, area 166, has a reduced wall thickness of about 1.4-1.5 mm (0.055-0.060 in), compared to a wall thickness in area 164 and in this area in known VHS cassettes of about 2.0 mm. The thinnest section of the cover top wall 56 are in the areas 168 located to the left and right of the area 164. The wall thickness of the areas 168 is further reduced by the depth of the label indentation 160, which can be as high as 0.53 mm. The wall thickness is areas 168 may be as low as 0.87 mm [1.4 mm - 0.53 mm = 0.87 mm].

As shown in Figure 3, edges 170 of the area 164 extend slightly beyond the edges 172 of the label indentation area 160, so that the area 164 slightly overlaps the label indentation area 160 in the front-to-back direction. A sectional view of this overlap is shown in Figure 5. The amount of overlap tₒ is approximately equal to wall thickness t_{w}. This overlap enhances the structural strength of the cover top wall 56 and facilitates the flow of molding material during injection. Furthermore, by maintaining the section shown in Figure 5 at approximately the same thickness throughout the overlap region, the chances of sink marks or other surface defects appearing as a result of sudden changes in wall thickness are reduced. While the edge 170 is portrayed as forming sharp corners in Figure 5, it could also form a more gentle transition, such as by being sloping or rounded.

In the left to right direction, the area 164 need not extend beyond the area defined by the label indentation 160, provided a suitable transition is made between the area 164 and the thinner area 166. The area 164 need not overlap the label indentation area 160 in the left-to-right direction the way that it does in the front-to-back direction. The transition areas 174, 176, 178, 180, 182 connect the area 164 with the areas 166 as shown in Figure 3.

Extensions 184 of the area 164 provide additional support of the spring 54 to allow springs used in conventional cassettes to be used in the thinner wall cassette of the present invention, without changing the location or bend angles of the crimps 58. Extensions 184 give the area 164 its cross-shaped configuration.

In addition to providing the structural strength, spring location, and spring support features, the area 164 also provides improved flow of molding material during injection. As shown in Figure 3, when the cover 12 is produced by injection molding, the gate 162 is typically located such that molding material must first flow through the area 164 before reaching the other parts of the mold. It has been found that by providing an area of conventional wall thickness, such as the area 164 connecting the gate 162 with the rest of the mold, the required injection pressure can be significantly reduced, thereby improving both manufacturability and part quality.

An additional feature of the present invention is the use of sloping transition sections between the thicker areas and the thinner areas. The transition areas 174, 176, 178, 180, 182 provide a gradual change in wall thickness between the area 164 and the area 166, as shown in Figure 3. If the transition from a wall thickness of 1.46 mm (0.058 inches) (in the area 164) to a wall thickness of 1.1 mm (0.043 inches) (in the area 168) is made over a distance of about 7.6 mm (0.30 inches), the appearance of the outside of the cover 12, especially in the label area 160, remains unaffected. This indicates that the flow of molding material during injection is not noticeably disrupted. More generally, if the transition from a first wall thickness to a second wall thickness which is 75% of the first wall thickness occurs over a distance of about five times the first wall thickness, no noticeable defects occur, even after subjecting the cassette to an environmental test of holding the cassette at 71°C (160° F) for 3 days. The transition areas 174-182 extend between the thicker area 164 and the thinner area 166 at only the sides of the first portion that run generally in the same direction as the side walls of the cover, as shown in Figure 3.

The range of distances over which the transition from the area 164 to the area 168 can be made depends upon the extent to which the outside surface can be treated, for example, with texturing to hide any defects. Making the transition over a shorter distance tends to create more severe surface defects the hiding of which, in turn, requires deeper texturing. If deeper texturing is not permitted, then the transition must be more gradual, occurring over a longer distance, to reduce the severity of surface blemishing to be covered. Depending upon the depth of texturing permitted in label indentation area 160, the transition in wall thickness can take place in as little as 1.27 mm (0.05 inches), if deep texturing is permitted on the outside surface, or as much as 10.1 mm (0.40 inches), if only shallower texturing is permitted.

Each side wall of the cover 12 combines with the rear wall to form a rear corner of the cover 12. The thickness of the upper wall in the rear corners of the cover 12 is greater than the thickness of the remainder of the thinner areas 166 to form a thicker corner pad 186, with the thicker area on the inside of the cover as shown in Figures 3, 6, and 7. The thickness of the corner pads 186 could equal the thickness of the thicker area 164. The corner pads 186 extend toward the screw bosses 46 and are spaced from the screw bosses 46 as best shown in Figures 6 and 7. The corner pads 186 eliminate visual defects in the cover caused by air entrapment due to the accelerating flow of material over the top and rear label surfaces of the cover 12 to the side walls. Increasing the wall thickness of the corner pads 186 decelerates the melt front of the mold material to allow proper venting and prevent air entrapment.

Additionally, a triangular strengthening brace 188 can be located on at least one side wall of the cover 12. The triangular strengthening brace 188 improves the surface quality of the outside wall of the cover 12. In particular, the triangular strengthening brace 188 can be designed to avoid leaving sink marks on the outside surface of the outside wall. Another type of defect which has been reduced by the triangular strengthening brace 188 is the appearance of weld lines. Weld lines occur when, during molding, plastic flows to an area by two different paths with the flow fronts from each path meeting to form a weld line, which remains visible on the finished part. Another closely related surface defect which is reduced by the triangular strengthening brace 188 is the flow line, which is a wavy line caused by certain unsatisfactory flow patterns.

A further improvement to the cover is the center insert 126, which includes walls 134, 136, as shown in Figure 2. In a conventional cassette, the center insert 126 serves primarily to hold a reel brake lever and to provide reinforcement to the outside wall 146 of the cover 12. These walls 134, 136 also serve as flow channels for conveying molding material to the outside wall during injection.

Normally, it is expected that providing more flow channels would improve filling and decrease injection fill time, to decrease cycle time. However, it has been found that the fill time can be shortened by removing sections of these walls that extend to the outside wall 146, and replacing them with triangular strengthening braces 148, 150. By eliminating the flow of material through the center insert 126 to the outside wall 146, more material is diverted to other, slower filling areas, resulting in a net overall shortening of fill time.

Various changes and modifications may be made in the invention departing from the scope or spirit of the invention.

## Claims

1. A videocassette cover (12) comprising:
- an upper wall (56) including a mounting device (60) for receiving a reel spring (54);
- two opposing side walls perpendicular to the upper wall (56);
- a front wall perpendicular to the upper wall (56) and the side walls; and
- a rear wall opposing the front wall and perpendicular to the upper wall (56) and the side walls;
wherein the upper wall (56) has a first portion (164) of conventional thickness located substantially in the center of the cover upper wall (56) and spaced from the side, front, and rear walls, wherein the first portion (164) extends over an area which encompasses at least the area contacted by the reel spring (54), and a second portion (166) of reduced thickness located substantially adjacent the side, front, and rear walls.

2. The videocassette cover (12) of claim 1 wherein the upper wall (56) has a transition area (174,176,178, 180,182) of varying thickness located between the first and second portions (164,166) and varying from the thickness of the first portion (164) to the thicknesse of the second portion (166).

3. The videocassette cover (12) of claim 2 wherein the thickness of the transition area (174,176,178,180, 182) varies uniformly.

4. The videocassette cover (12) of claim 2 or 3 wherein the transition area (174,176,178,180,182) extends between the first and second portions at only the sides of the first portion that run generally in the same direction as the side walls of the cover.

5. The videocassette cover (12) of any one of claims 1 to 4 wherein the first portion (164) is cross-shaped.

6. The videocassette cover (12) of any one of claims 1 to 5 wherein each side wall combines with the rear wall to form a rear corner of the cover (12) and wherein the thickness of the upper wall (56) in the rear corners of the cover (12) is greater than the thickness of the remainder of the second portion (166) located substantially adjacent the side, front, and rear walls to form a thicker corner pad (186).

7. The videocassette cover (12) of any one of claims 1 to 6 further comprising at least one strengthening brace (188) connecting one cover side wall and the cover upper wall (56).

8. The videocassette cover (12) of any one of claims 1 to 7 further comprising an insert area (126) disposed on the cover upper wall (56) adjacent the cover rear wall and comprising two opposing side walls (134,136), each spaced from the cover rear wall, and at least one strengthening brace (148) connecting the cover rear wall and the cover upper wall (56).

9. The videocassette cover (12) of any one of claims 1 to 8 further comprising two strengthening braces (148,150) connecting the cover rear wall and the cover upper wall (56), wherein each strengthening brace (148,150) is substantially coplanar with a respective insert area side wall (134,136).

10. The cassette cover (12) of any one of claims 1 to 8 wherein the strengthening brace (148) is triangular.

11. A videocassette cover (12) comprising:
- an upper wall (56);
- two opposing side walls perpendicular to the upper wall (56);
- a front wall perpendicular to the upper wall (56) and the side walls; and
- a rear wall opposing the front wall and perpendicular to the upper wall (56) and the side walls;
wherein each side wall combines with the rear wall to form a rear corner of the cover and wherein the thickness of the upper wall (56) in the rear corners of the cover is greater than the thickness of the remainder of the upper wall (56) located substantially adjacent the side, front, and rear walls to form a thicker corner pad (186).

12. A videocassette cover (12) comprising:
- an upper wall (56) including a mounting device (60) for receiving a reel spring (54);
- two opposing side walls perpendicular to the upper wall (56);
- a front wall perpendicular to the upper wall (56) and the side walls;
- a rear wall opposing the front wall and perpendicular to the upper wall (56) and the side walls; and
- at least one strengthening brace (188) connecting one base side wall and the base lower wall.

13. The videocassette cover (12) of claim 12 wherein the strengthening brace (188) is triangular.

14. A videocassette cover (12) comprising:
- an upper wall (56) including a mounting device (60) for receiving a reel spring (54);
- two opposing side walls perpendicular to the upper wall (56);
- a front wall perpendicular to the upper wall (56) and the side walls; and
- an insert area (126) disposed on the cover upper wall (56) adjacent the cover rear wall and comprising two opposing side walls (134,136), each spaced from the cover rear wall and at least one strengthening brace (148) connecting the cover rear wall and the cover upper wall (56).

15. The cassette cover (12) of claim 14 further comprising two strengthening braces (148,150) connecting the cover rear wall and the cover upper wall (56), wherein each strengthenging brace (148,150) is substantially coplanar with a respective insert area side wall (134,136).

16. The cassette cover (12) of claim 14 or 15 wherein the strengthening brace (148) is triangular.
